# EUROPÄISCHE PATENTSCHRIFT

(11) **EP 1 286 848 B1**
(45) Veröffentlichungstag und Bekanntmachung des Hinweises auf die Patenterteilung: **23.06.2010**
(21) Anmeldenummer: 01945137.6
(22) Anmeldetag: 16.05.2001
(51) Int. Cl.: B60W 30/18, B60K 28/16, B60W 10/06, B60W 10/10, B60W 10/18

(54) **VERFAHREN ZUM BETREIBEN EINER FAHRZEUGSANTRIEBSVORRICHTUNG MIT KONTINUIERLICH VERSTELLBAREM GETRIEBE (CVT) IN EINER BREMSEINGRIFFSBETRIEBSART**
METHOD FOR OPERATING A VEHICLE DRIVE DEVICE WITH A CONTINUOUSLY VARIABLE TRANSMISSION (CVT) IN A BRAKE-ENGAGING MODE
PROCEDE POUR UTILISER UN DISPOSITIF D'ENTRAINEMENT SUR UN VEHICULE A TRANSMISSION A CHANGEMENT DE VITESSES CONTINU (CVT) SELON UN MODE FAISANT INTERVENIR LE FREINAGE

(30) Priorität: 06.06.2000 DE 10027602; 15.09.2000 DE 10045625
(43) Veröffentlichungstag der Anmeldung: 05.03.2003
(73) Patentinhaber: Conti Temic microelectronic GmbH, 90411 Nürnberg (DE)
(72) Erfinder: RÖDER, Oswin, 85088 Vohburg (DE); WILD, Horst, 91238 Engelthal (DE)
(86) Internationale Anmeldenummer: PCT/EP2001/005539
(87) Internationale Veröffentlichungsnummer: WO 2001/094146

(56) Entgegenhaltungen:
- EP-A- 0 896 895
- US-A- 5 218 541
- PATENT ABSTRACTS OF JAPAN vol. 1996, no. 05, 31. Mai 1996 (1996-05-31) & JP 08 020265 A (NISSAN MOTOR CO LTD), 23. Januar 1996 (1996-01-23)
- PATENT ABSTRACTS OF JAPAN vol. 015, no. 475 (M-1186), 3. Dezember 1991 (1991-12-03) & JP 03 204459 A (FUJI HEAVY IND LTD), 6. September 1991 (1991-09-06)

## Beschreibung

Die Erfindung betrifft ein Verfahren zum Betreiben einer Antriebsvorrichtung eines Kraftfahrzeugs.

Die Antriebsvorrichtungen von Kraftfahrzeugen umfassen üblicherweise einen Motor und ein Getriebe, über das das Motormoment auf Antriebsräder übertragen wird. Zudem ist es üblich, Bremssteuergeräte für besondere Bremsenfunktionen vorzusehen. Derartige Bremsenfunktionen sind beispielsweise unter den Begriffen Antischlupfregelung (ASR), elektronische Differentialsperre (EDS) und elektronisches Stabilitätsprogramm (ESP) bekannt. Die besonderen Bremsenfunktionen sind aktiv, wenn eines oder mehrere der Räder des Kraftfahrzeugs einen einen bestimmten Wert überschreitenden Schlupf aufweisen.

Bei einem Kraftfahrzeug mit stufenlosem Automatikgetriebe ist das Übersetzungsverhältnis des Automatikgetriebes stufenlos variierbar und ermöglicht somit die optimale Ausnutzung des Motormoments. Das Übersetzungsverhältnis wird hierzu mit einem Getrieberegler geregelt, wobei die Regelung nach bestimmten vordefinierten Strategien erfolgen kann.

Die US 5,218,541 A beschreibt ein Verfahren zur Regelung des Momentenverhältnisses eines stufenlos regelbaren Getriebes, basierend auf dem Ausgangssignal einer Vorrichtung zur Erkennung der Beschaffenheit der Fahrbahnoberfläche. Somit kann die ein Rad antreibende Kraft an die Beschaffenheit der Fahrbahnoberfläche angepasst werden.

Die EP 0 896 895 A2 zeigt eine Antriebskraft-Steuervorrichtung für ein Fahrzeug, ausgerüstet mit einem Antiblockier-Bremssytem und einem stufenlos regelbaren Getriebe. Darin wird beschrieben, wie die Wirkung der Motorbremse in der Phase, in der das Antiblockier-Bremssystem wirkt, durch Steuerung des Motors und des stufenlos regelbaren Getriebes reduziert wird.

Tritt nun an einem der Antriebsräder ein erhöhter Schlupf auf, so kann dies bei der Getrieberegelung zu einem Anstieg der Regelabweichung führen. Der Getrieberegler würde versuchen diese Regelabweichung auszuregeln, was zu schnellen Änderungen des Übersetzungsverhältnisses und somit zu schnellen Änderungen der Momente der Antriebsräder führen würde. Schnelle Änderungen der Momente der Antriebsräder würden jedoch die Wirksamkeit der Bremsenfunktionen beeinträchtigen und zu einer wiederholten Aktivierung und Deaktivierung der Bremsenfunktionen führen. Um diesen Nachteil zu vermeiden, wird eine Änderung des Übersetzungsverhältnisses des Automatikgetriebes verhindert, solange eine der Bremsenfunktionen aktiv ist.

Dies hat zur Folge, daß das Motormoment bei längerer Fahrt auf einer Fahrbahn mit niedrigem Reibwert, beispielsweise auf einer mit Schnee oder Eis bedeckten Fahrbahn, insbesondere bei einer Fahrt mit hohem Fahrpedalwinkel, d. h. bei einem hohen Beschleunigungswunsch des Fahrers, durch die Antischlupfregelung langanhaltend stark reduziert wird, die Motordrehzahl aber weiterhin auf hohem Niveau verbleibt. Dies führt zu einem störenden hohen Motorgeräusch.

Der Erfindung liegt die Aufgabe zugrunde, ein Verfahren zum Betreiben einer Antriebsvorrichtung eines Kraftfahrzeugs anzugeben, das eine Verbesserung des Fahrkomforts bei wirksamen Bremsenfunktionen ermöglicht.

Die Aufgabe wird durch die Merkmale des Patentanspruchs 1 gelöst. Vorteilhafte Ausgestaltungen und Weiterbildungen der Erfindung ergeben sich aus den Unteransprüchen.

Beim erfindungsgemäßen Verfahren werden die Antriebsräder eines Kraftfahrzeugs über ein stufenloses Automatikgetriebe durch einen Motor angetrieben, wobei eine Normal-Betriebsart für den normalen Fahrbetrieb vorgegeben wird und eine Bremseingriffs-Betriebsart für den Fall, daß ein einen bestimmten Wert überschreitender Schlupf mindestens eines der Antriebsräder detektiert wird, vorgegeben wird. In der Normal-Betriebsart wird ein Normal-Motormomentwert als Sollwert des Motormoments des Motors vorgegeben. In der Bremseingriffs-Betriebsart wird das Motormoment durch einen durch eine Bremsenfunktion bewirkten Motoreingriff auf einen gegenüber dem Normal-Motormomentwert geringeren Ist-Motormomentwert reduziert. In der Bremseingriffs-Betriebsart wird ferner die Differenz zwischen dem Normal-Motormomentwert und dem Ist-Motormomentwert als Differenzmoment ermittelt und eine maximale Soll-Antriebsdrehzahl für die Antriebsdrehzahl des Automatikgetriebes in Abhängigkeit des Differenzmoments vorgegeben. Unter Antriebsdrehzahl wird dabei die motorseitige Drehzahl des Automatikgetriebes verstanden, die bei geschlossener Kupplung gleich der Motordrehzahl ist.

Vorzugsweise wird die maximale Soll-Antriebsdrehzahl in der Bremseingriffs-Betriebsart derart vorgegeben, daß sie bei einem einen ersten Schwellwert überschreitenden Wert des Differenzmoments fortlaufend reduziert wird, wobei die Reduktion vorteilhafterweise mit einer vorgebbaren Änderungsgeschwindigkeit erfolgt und wobei vorzugsweise eine von der Fahrgeschwindigkeit abhängige minimale Antriebsdrehzahl als untere Grenze der maximalen Soll-Antriebsdrehzahl nicht unterschritten wird.

In einer vorteilhaften Weiterbildung des Verfahrens wird ein unterhalb des ersten Schwellwerts liegender zweiter Schwellwert als weiterer Schwellwert definiert und das die maximale Soll-Antriebsdrehzahl des Automatikgetriebes bei einem den zweiten Schwellwert unterschreitenden Wert des Differenzmoments derart variiert, daß sie fortlaufend bis auf einen bestimmten Grenzwert erhöht wird, wobei diese Erhöhung vorzugsweise mit einer von der Änderungsgeschwindigkeit des Differenzmoments abhängigen Geschwindigkeit erfolgt.

Vorteilhafterweise wird die maximale Soll-Antriebsdrehzahl bei zwischen dem ersten und zweiten Schwellwert liegenden Differenzmoment auf konstantem Wert festgehalten.

Das erfindungsgemäße Verfahren weist folgende Vorteile auf:
- es gewährleistet einen niedrigen Kraftstoffverbrauch bei längeren Fahrten mit aktiven Bremsenfunktionen, da der Motor nicht mit unnötig hohen Antriebsdrehzahlen betrieben wird;
- der Fahrkomfort wird durch die Reduzierung der Motorgeräusche verbessert, da der Motor nicht mit geringem Motormoment und trotzdem hohen Antriebsdrehzahlen betrieben wird;
- es wird eine bessere Unterstützung der Bremsenfunktionen gewährleistet, da diese nicht wiederholt aktiviert und deaktiviert werden und ihnen eine für die Regelung ausreichende Momentenreserve zur Verfügung gestellt wird.

Die Erfindung wird nachfolgend anhand eines Ausführungsbeispiel und der Figuren näher erläutert. Es zeigen:
- Figur 1: ein Zeitdiagramm der Motormomente,
- Figur 2: ein Zeitdiagram der Antriebsdrehzahlen.

Das erfindungsgemäße Verfahren wird zum Betreiben der Antriebsvorrichtung eines Kraftfahrzeug eingesetzt, die einen Motor sowie ein stufenloses Automatikgetriebe, d. h. ein Getriebe mit stufenlos variierbarem Übersetzungsverhältnis, umfaßt. Bei der Steuerung der Antriebsvorrichtung wird zwischen einer Normal-Betriebsart und einer Bremseingriffs-Betriebsart unterschieden, wobei die Normal-Betriebsart für den normalen Fahrbetrieb vorgesehen ist und die Bremseingriffs-Betriebsart für den Fall vorgesehen ist, daß an einem der Antriebsräder des Fahrzeugs ein einen bestimmten Wert überschreitender Schlupf auftritt, der zur Aktivierung einer Bremsfunktion führt. Die Steuerung der Antriebsvorrichtung wird nachfolgend für eine bestimmte Fahrsituation näher erläutert.

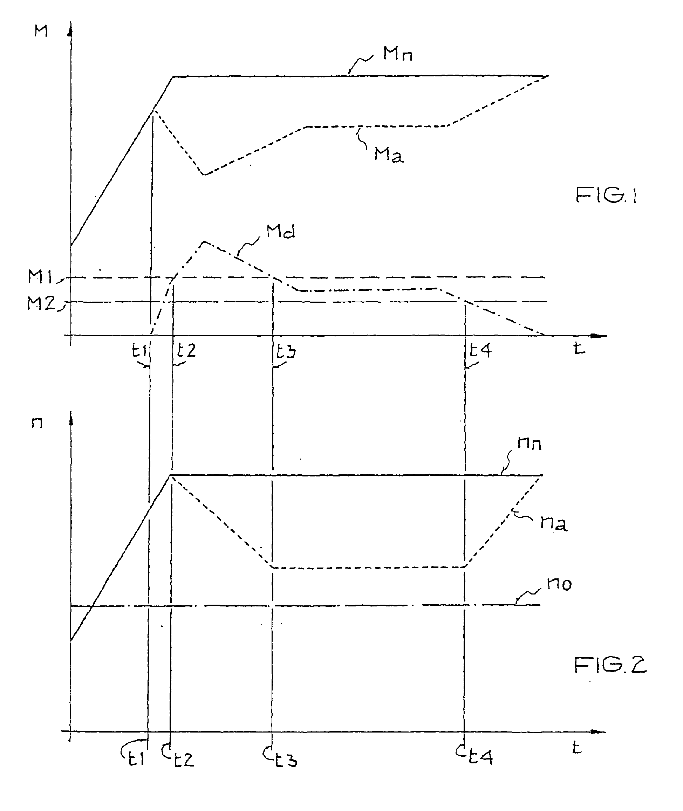

Figur 1 zeigt anhand der Kurve Mn der Verlauf eines im folgenden als Normal-Motormomentwert bezeichneten Motormomentwerts, den man in der Normal-Betriebsart bei der bestimmten Fahrsituation als Sollwert des Motormoments M erhalten würde. Es handelt sich hierbei um einen Wert, der in Abhängigkeit des den Fahrerwunsch vorgebenden Fahrpedalwinkels oder Drosselklappenwinkels und in Abhängigkeit von verschiedenen Betriebsparametern von einem Motorsteuergerät, beispielsweise anhand eines Kennfeldes, ermittelt wird.

Zum Zeitpunkt t1 tritt ein hoher Schlupf an einem der Antriebsräder auf und die Antischlupfregelung wird als Bremsenfunktion aktiv. Hierdurch wird durch ein Bremssteuergerät die Raddrehzahl und somit auch das Radmoment an den Antriebsrädern gesteuert. Mit der Aktivierung der Bremsenfunktion wird auch die Antriebsvorrichtung in die Bremseingriffs-Betriebsart geschaltet und das Motormoment M durch die auf das Motorsteuergerät wirkende Bremsenfunktion auf einen Ist-Motormomentwert Ma reduziert.

Während der Bremseingriffs-Betriebsart wird die Differenz zwischen dem Normal-Motormomentwert Mn und dem Ist-Motormomentwert Ma als Differenzmoment Md ermittelt und die maximale Soll-Antriebsdrehzahl wird in Abhängigkeit der Differenzmoments Md derart variiert, daß das Differenzmoment Md nicht zu hoch ansteigt, daß aber doch noch genügend Momentenreserve für die durch die Bremsenfunktion durchgeführte Regelung übrig bleibt, ohne daß die Gefahr besteht, daß die Bremsenfunktion innerhalb kurzer Zeit-mehrfach aktiviert und deaktiviert wird.

Die Raddrehzahl der Antriebsräder wird in der Bremseingriffs-Betriebsart durch die Bremsenfunktion bestimmt, so daß die Antriebsdrehzahl durch Variation des Übersetzungsverhältnisses des Automatikgetriebes gesteuert wird. Das Motormoment M wird dabei durch das Motorsteuergerät auf den gewünschten Wert eingestellt.

In Figur 2 stellt die Kurve nn den Verlauf der maximalen Normal-Sollantriebsdrehzahl dar, den man in der Normal-Betriebsart als Maximalwert der Soll-Antriebsdrehzahl n erhält, und die Kurve na stellt der Verlauf der maximalen Soll-Antriebsdrehzahl in der Bremseingriffs-Betriebsart dar.

Gemäß Figur. 2 wird die maximale Soll-Antriebsdrehzahl na in der Bremseingriffs-Betriebsart abgesenkt, sobald das Differenzmoment Md einen ersten Schwellwert M1 überschritten hat, also zum Zeitpunkt t2. Die Absenkung erfolgt dabei mit einer bestimmten Änderungsgeschwindigkeit und dauert solange, bis das Differenzmoment Md den ersten Schwellwert M1 wieder unterschreitet. Dies geschieht zum Zeitpunkt t3. Als untere Grenze der maximalen Soll-Antriebsdrehzahl na wird dabei eine minimale, von der Fahrgeschwindigkeit abhängige Antriebsdrehzahl n0 vorgegeben. Die Vorgabe dieser minimale Antriebsdrehzahl n0 erfolgt derart, daß für den Fahrer bei der aktuellen Fahrgeschwindigkeit keine unerwartet hohen Antriebsdrehzahl-Änderungen auftreten oder unerwartet niedrige Antriebsdrehzahlen entstehen.

Ab dem Zeitpunkt t3 wird die maximale Soll-Antriebsdrehzahl na bis zum Zeitpunkt t4 konstantgehalten, also solange, bis das Differenzmoment Md einen unterhalb des ersten Schwellwerts M1 liegenden zweiten Schwellwert M2 unterschreitet. Dieser zweite Schwellwert M2 wird derart gewählt, daß die dem Differenzmoment Md entsprechende Momentenreserve im Zeitintervall t2 bis t4 ausreichend groß ist, um eine sichere Durchführung der Bremsenfunktion zu gewährleisten, so daß die Bremsenfunktion nicht innerhalb kurzer Zeit mehrfach aktiviert und deaktiviert wird, was zu einem unruhigen Drehzahlverhalten führen würde. Der erste Schwellwert M1 wird dann derart gewählt, daß aus dem Abstand zwischen den beiden Schwellwerten M1, M2 ein hystereseförmiges Betriebsverhalten resultiert, so daß die maximale Soll-Antriebsdrehzahl na sich im Wert nicht ständig verändert.

Ab dem Zeitpunkt t4 steigt die maximale Soll-Antriebsdrehzahl na mit einer vorgebbaren Anstiegsgeschwindigkeit bis zur maximalen Normal-Sollantriebsdrehzahl nn als Grenzwert an.

Diese Anstiegsgeschwindigkeit wird in Abhängigkeit der zeitlichen Änderung des Differenzmoments Md derart vorgegeben, daß die maximale Soll-Antriebsdrehzahl na mit erhöhter Anstiegsgeschwindigkeit ansteigt, wenn das Differenzmoment Md, beispielsweise aufgrund einer schlagartigen Erhöhung des Reibwerts der Fahrbahn, sehr schnell ansteigt. Somit wird gewährleistet, daß die maximale Soll-Antriebsdrehzahl na bei der Deaktivierung der Bremsfunktion, d. h. bei der Umschaltung in die Normal-Betriebsart, gleich der maximalen Normal-Sollantriebsdrehzahl nn ist oder zumindest in deren Nähe liegt. Beispielsweise kann eine Schwelle für die Änderungsgeschwindigkeit des Differenzmoments Md definiert werden und geprüft werden, ob die Änderungsgeschwindigkeit des Differenzmoments Md größer oder kleiner als die definierte Schwelle ist. Die Anstiegsgeschwindigkeit der maximaler Soll-Antriebsdrehzahl na läßt sich dann in Abhängigkeit des Vergleichsergebnisses zwischen zwei Werten umschalten, die sich beispielsweise um den Faktor 2 voneinander unterscheiden, wobei die Umschaltung derart erfolg, daß eine schnelle Änderung des Differenzmoments Md auch eine schnelle Änderung der maximalen Soll-Antriebsdrehzahl na zur Folge hat.

## Patentansprüche

1. Verfahren zum Betreiben einer Antriebsvorrichtung eines Kraftfahrzeugs, bei dem Antriebsräder des Kraftfahrzeugs über ein stufenloses Automatikgetriebe durch einen Motor angetrieben werden, wobei
- eine Normal-Betriebsart für den normalen Fahrbetrieb vorgegeben wird,
- eine Bremseingriffs-Betriebsart für den Fall vorgegeben wird, daß ein einen bestimmten Wert überschreitender Schlupf an mindestens einem der Antriebsräder detektiert wird,
- in der Normal-Betriebsart ein Normal-Motormomentwert (Mn) als Sollwert des Motormoments (M) des Motors vorgegeben wird,
**dadurch gekennzeichnet, dass** in der Bremseingriffs-Betriebsart das Motormoment (M) gegenüber dem Normal-Motormomentwert (Mn) auf einen Ist-Motormomentwert (Ma) reduziert wird, die Differenz zwischen dem Normal-Motormomentwert (Mn) und dem Ist-Motormomentwert (Ma) als Differenzmoment (Md) ermittelt wird und eine maximale Soll-Antriebsdrehzahl (na) für die Antriebsdrehzahl (n) des Automatikgetriebes in Abhängigkeit des Differenzmoments (Md) vorgegeben wird.

2. Verfahren nach Anspruch 1, **dadurch gekennzeichnet, daß** die maximale Soll-Antriebsdrehzahl (na) in der Bremseingriffs-Betriebsart bei einem einen ersten Schwellwert (M1) überschreitenden Wert des Differenzmoments (Md) reduziert wird.

3. Verfahren nach Anspruch 2, **dadurch gekennzeichnet, daß** die Reduktion der maximalen Soll-Antriebsdrehzahl (na) mit einer vorgebbaren Änderungsgeschwindigkeit erfolgt.

4. Verfahren nach Anspruch 2 oder 3, **dadurch gekennzeichnet, daß** ein unterhalb des ersten Schwellwerts (M1) liegender zweiter Schwellwert (M2) definiert wird und daß die maximale Soll-Antriebsdrehzahl (na) bei einem den zweiten Schwellwert (M2) unterschreitenden Wert des Differenzmoments (Md) erhöht wird.

5. Verfahren nach Anspruch 4, **dadurch gekennzeichnet, daß** die Erhöhung der maximalen Soll-Antriebsdrehzahl (na) mit einer von der Änderungsgeschwindigkeit des Differenzmoments (Md) abhängigen Anstiegsgeschwindigkeit erfolgt.

6. Verfahren nach Anspruch 4 oder 5, **dadurch gekennzeichnet, daß** die maximale Soll-Antriebsdrehzahl (na) bei zwischen dem ersten und zweiten Schwellwert (M1, M2) liegendem Differenzmoment (Md) konstant gehalten wird.

7. Verfahren nach einem der Ansprüche 1 bis 6, **dadurch gekennzeichnet, daß** eine von der Fahrgeschwindigkeit abhängige minimale Antriebsdrehzahl (n0) als untere Grenze für die maximale Soll-Antriebsdrehzahl (na) vorgegeben wird.

## Claims

1. Method for operating a drive device of a motor vehicle in which driving wheels of the motor vehicle are driven by an engine via a continuously variable automatic transmission, wherein
- a normal operating mode is provided for the normal travel mode,
- a brake operation mode is provided for the case in which a slip exceeding a given value is detected at at least one of the driving wheels,
- in the normal operating mode, a normal engine torque value (Mn) is preset as a desired value of the engine torque (M) of the engine,
**characterized in that** in the brake operation mode, the engine torque (M) is reduced to an actual engine torque value (Ma) as against the normal engine torque value (Mn), the difference between the normal engine torque value (Mn) and the actual engine torque value (Ma) is determined as a differential torque (Md), and a maximum desired driving speed (na) for the driving speed (n) of the automatic transmission is preset in dependence on the differential torque (Md).

2. Method according to claim 1, **characterized in that** in the brake operation mode, the maximum desired driving speed (na) is reduced at a value of the differential torque (Md) that exceeds a first threshold value (M1).

3. Method according to claim 2, **characterized in that** the maximum desired driving speed (na) is reduced at a rate of change that can be preset.

4. Method according to claim 2 or 3, **characterized in that** a second threshold value (M2) is defined that is below the first threshold value (M1), and that the maximum desired driving speed (na) is increased at a value of the differential torque (Md) that falls below the second threshold value (M2).

5. Method according to claim 4, **characterized in that** the maximum desired driving speed (na) is increased at a rate of increase that depends on the rate of change of the differential torque (Md).

6. Method according to claim 4 or 5, **characterized in that** the maximum desired driving speed (na) is maintained constant when the differential torque (Md) is between the first threshold value (M1) and the second threshold value (M2).

7. Method according to any one of claims 1 to 6, **characterized in that** a minimum driving speed (n0) that depends on the travelling speed is preset as a lower limit for the maximum desired driving speed (na).

## Revendications

1. Procédé de fonctionnement d'un dispositif d'entraînement d'un véhicule automobile dans lequel les roues motrices du véhicule automobile sont entraînées par un moteur par le biais d'une boîte de vitesses automatique à fonctionnement continu,
- un mode de fonctionnement normal étant paramétré pour le fonctionnement de conduite normal,
- un mode de fonctionnement avec intervention de frein étant paramétré pour le cas dans lequel un patinage dépassant une valeur définie est détecté sur au moins une des roues motrices,
- une valeur normale de couple moteur (Mn) étant, dans le mode de fonctionnement normal, paramétré en tant que valeur de consigne du couple moteur (M) du moteur,
**caractérisé en ce que**, dans le mode de fonctionnement avec intervention de frein, le couple moteur (M) est, par rapport à la valeur normale de couple moteur (Mn), réduit à une valeur effective de couple moteur (Ma), la différence entre la valeur normale de couple moteur (Mn) et la valeur effective de couple moteur (Ma) est déterminée en tant que couple différentiel (Md), et un régime de consigne d'entraînement maximal (na) est paramétré pour le régime d'entraînement (n) de la boîte de vitesses automatique en fonction du couple différentiel (Md).

2. Procédé selon la revendication 1, **caractérisé en ce que** le régime de consigne d'entraînement maximal (na) dans le mode de fonctionnement avec intervention de frein est réduit en présence d'une valeur du couple différentiel (Md) qui dépasse une première valeur de seuil (M1).

3. Procédé selon la revendication 2, **caractérisé en ce que** la réduction du régime de consigne d'entraînement maximal (na) s'effectue à une vitesse de modification paramétrable.

4. Procédé selon la revendication 2 ou 3, **caractérisé en ce qu'**une deuxième valeur de seuil (M2) située au-dessous de la première valeur de seuil (M1) est définie, et **en ce que** le régime de consigne d'entraînement maximal (na) est augmenté en présence d'une valeur du couple différentiel (Md) qui passe sous la deuxième valeur de seuil (M2).

5. Procédé selon la revendication 4, **caractérisé en ce que** l'augmentation du régime de consigne d'entraînement maximal (na) s'effectue à une vitesse de montée qui dépend de la vitesse de modification du couple différentiel (Md).

6. Procédé selon la revendication 4 ou 5, **caractérisé en ce que** le régime de consigne d'entraînement maximal (na) est maintenu constant en présence d'un couple différentiel (Md) situé entre la première et la deuxième valeur de seuil (M1, M2).

7. Procédé selon une des revendications 1 à 6, **caractérisé en ce qu'**un régime d'entraînement minimal (n0) dépendant de la vitesse de conduite est paramétré en tant que limite inférieure pour le régime de consigne d'entraînement maximal (na).
